# EUROPEAN PATENT APPLICATION

(11) **EP 2 053 390 A1**
(43) Date of publication of application: **29.04.2009**
(21) Application number: 07850022.0
(22) Date of filing: 04.12.2007
(51) Int. Cl.: G01N 27/409, F02D 35/00, F02D 41/14, G01N 27/04, G01N 27/12

(54) **OXYGEN SENSOR, AND INTERNAL COMBUSTION ENGINE AND TRANSPORT APPARATUS PROVIDED WITH THE OXYGEN SENSOR**

(30) Priority: 20.12.2006 JP 2006342198
(71) Applicant: Yamaha Hatsudoki Kabushiki Kaisha, Iwata-shi, Shizuoka 438-8501 (JP)
(72) Inventor: MATSUMOTO, Hiroshi, Iwata-shi Shizuoka 438-8501 (JP)
(74) Representative: Stöckeler, Ferdinand
(86) International application number: PCT/JP2007/073372
(87) International publication number: WO 2008/075555

(57) **Abstract**

There is provided an oxygen sensor which is highly waterproof in a high-temperature environment and yet allows for downsizing.

An oxygen sensor according to the present invention includes: a sensor element having a detection section for detecting oxygen; a housing, the sensor element being insert at one end thereof in such a manner that the detection section is exposed; a cylindrical member provided at another end of the housing; a sealing member for sealing the cylindrical member; and a terminal portion connected to the sensor element. The sealing member has a throughhole, and is made of a heat-resistant resin. The terminal portion is press-fitted in the throughhole of the sealing member.

## Description

### TECHNICAL FIELD

The present invention relates to an oxygen sensor. Moreover, the present invention relates to an internal combustion engine and a transportation apparatus incorporating an oxygen sensor.

### BACKGROUND ART

From the standpoint of environmental issues and energy issues, it has been desired to improve the fuel consumption of internal combustion engines, and reduce the emission amount of regulated substances (e.g., NOx) that are contained within exhaust gas from internal combustion engines. In order to meet these needs, it is necessary to appropriately control the ratio between fuel and air in accordance with the state of combustion, so that fuel combustion will occur always under optimum conditions. The ratio of air to fuel is called an air-fuel ratio (A/F). In the case where a ternary catalyst is employed, the optimum air-fuel ratio would be the stoichiometric air-fuel ratio. The stoichiometric air-fuel ratio is an air-fuel ratio at which air and fuel will just sufficiently combust.

When fuel is combusting at the stoichiometric air-fuel ratio, a certain amount of oxygen is contained within the exhaust gas. When the air-fuel ratio is smaller than the stoichiometric air-fuel ratio (i.e., the fuel concentration is relatively high), the oxygen amount in the exhaust gas decreases relative to that under the stoichiometric air-fuel ratio. On the other hand, when the air-fuel ratio is greater than the stoichiometric air-fuel ratio (i.e., the fuel concentration is relatively low), the oxygen amount in the exhaust gas increases. Therefore, by measuring the oxygen amount or oxygen concentration in the exhaust gas by using a sensor, it is possible to estimate how much deviation the air-fuel ratio has relative to the stoichiometric air-fuel ratio. This makes it possible to adjust the air-fuel ratio and control the fuel combustion so as to occur under the optimum conditions.

An oxygen sensor for detecting oxygen within exhaust gas is to be attached to an exhaust pipe of an internal combustion engine, and therefore may possibly be wetted during travel. Therefore, an oxygen sensor is preferably structured so that intrusion of water into the interior is prevented. An oxygen sensor having such a highly-waterproof structure is disclosed in Patent Document 1.

FIG. **16** shows an oxygen sensor **800** with a waterproof structure which is disclosed in Patent Document 1. The oxygen sensor **800** includes a sensor element **810** and a housing **820** into which the sensor element **810** is inserted. The housing **820** is made of a metal material such as stainless steel. The housing **820** allows the oxygen sensor **800** to be secured to an exhaust pipe of an internal combustion engine.

The sensor element **810** includes a detection section **811** for detecting oxygen and a substrate **812** for supporting the detection section **811.** The sensor element **810** is disposed at the lower end of the housing **820** in such a manner that the detection section **811** is exposed. The sensor element **810** is secured to the housing **820** by an attachment member **821** which is formed inside the housing **820** from a glass material.

At the lower end of the housing **820**, a cover member **870** is provided so as to cover the detection section **811** of the sensor element **810**. The cover member **870** is composed of an inner cover **871** and an outer cover **872.** An opening **873** for allowing exhaust gas in is formed in each of the inner cover **871** and the outer cover **872.**

The sensor element **810** is electrically connected to leads **860** via a terminal portion **850** which is provided at an end thereof. The leads **860** are coated with an insulative resin (e.g. PTFE).

At the upper end of the housing **820**, a cylindrical member **830** which is made of a metal material such as stainless steel is provided. Inside the cylindrical member **830** is disposed a rubber member **840** having throughholes **842** in which the leads **860** are to be inserted. By crimping inward a portion **831** of the cylindrical member **830** (i.e., a portion where the rubber member **840** is disposed), the leads **860** become secured and the cylindrical member **830** becomes sealed.
[Patent Document 1] Japanese Patent No. 3493875

### DISCLOSURE OF INVENTION

### PROBLEMS TO BE SOLVED BY THE INVENTION

However, even if a structure as shown in Patent Document 1 is used, the neighborhood of the exhaust pipe reaches a high temperature, thus leading to the following problems. As a result, it is actually impossible to attain a sufficient waterproofness.

First, the rubber member **840** has poor heat resistance. For example, a rubber member **840** which is made of fluoro rubber has a withstand temperature of about 200°C. Therefore, the rubber member **840** is deteriorated due to heat from the exhaust pipe, which is conducted via the cylindrical member **830** made of a metal material, thus resulting in a lower waterproofness. Although it might be possible to lengthen the cylindrical member 830 in order to suppress a temperature increase of the rubber member **840**, such a construction would make the oxygen sensor **800** itself long, thus requiring a large space for accommodation. Moreover, the resin with which the leads **860** are coated will shrink while being exposed to a high-temperature atmosphere for a long time, thus creating a gap between the leads **860** and the rubber member **840**. This also lowers waterproofness.

The present invention has been made in view of the aforementioned problems, and an objective thereof is to provide an oxygen sensor which is highly waterproof in a high-temperature environment and yet allows for downsizing.

### MEANS FOR SOLVING THE PROBLEMS

An oxygen sensor according to the present invention comprises: a sensor element having a detection section for detecting oxygen; a housing, the sensor element being inserted at one end thereof in such a manner that the detection section is exposed; a cylindrical member provided at another end of the housing; a sealing member for sealing the cylindrical member; and a terminal portion connected to the sensor element, wherein, the sealing member has a throughhole, and is made of a heat-resistant resin; and the terminal portion is press-fitted in the throughhole of the sealing member.

In a preferred embodiment, the housing and the sealing member abut each other.

In a preferred embodiment, the housing and the sealing member are shaped so as to be fitted together.

In a preferred embodiment, the heat-resistant resin has a glass transition temperature or heat deflection temperature of 250°C or more.

In a preferred embodiment, the oxygen sensor according to the present invention comprises a lead which is electrically connected to the sensor element via the terminal portion, wherein, the lead is inserted in the throughhole of the sealing member.

In a preferred embodiment, the oxygen sensor according to the present invention further comprises a watertight cap covering the lead, wherein the lead is inserted in the throughhole together with the watertight cap.

An internal combustion engine according to the present invention comprises an oxygen sensor having the above construction.

A transportation apparatus according to the present invention comprises an internal combustion engine having the above construction.

In an oxygen sensor according to the present invention, the terminal portion is press-fitted in a throughhole of the sealing member, thus sealing the cylindrical member and forming a watertight structure. Therefore, the sealing member does not need to be a rubber member, and a heat-resistant resin can be used as the material of the sealing member. As a result, it is possible to suppress deterioration in waterproofness due to deterioration of the sealing member itself due to heat. Moreover, since it is unnecessary to make the cylindrical member long in order to prevent deterioration of the sealing member due to heat, the oxygen sensor itself can be downsized. Furthermore, since the throughhole of the sealing member is closed by the press-fitted terminal portion, even if a resin with which the lead is coated shrinks due to heat, intrusion of water inside the oxygen sensor can be prevented.

By adopting a construction in which the housing and the sealing member abut each other, the housing and the sealing member can be allowed to function as a positioning structure during the production steps of the oxygen sensor, thus resulting in a greater ease of assembly.

In the case where the housing and the sealing member are shaped so as to be fitted together, movement of the sealing member along the horizontal direction (the direction orthogonal to the center axis of the oxygen sensor) can be limited when press-fitting the sealing member to the cylindrical member. Therefore, the stress acting on the foot of the sensor element can be reduced, and occurrence of product defects due to breakage of the sensor element can be suppressed.

From the standpoint of preventing deterioration of the sealing member due to heat, it is preferable that the heat-resistant resin which is the material of the sealing member has a glass transition temperature or heat deflection temperature of 250°C or more.

An oxygen sensor according to the present invention typically has a lead which is electrically connected to the sensor element via the terminal portion, this lead being inserted in the throughhole of the sealing member.

By providing a watertight cap so as to cover the lead, and inserting the lead into the throughhole of the sealing member together with the watertight cap, intrusion of water and dust inside the oxygen sensor can be prevented with greater certainty.

An oxygen sensor according to the present invention is highly waterproof in a high-temperature environment, and therefore is suitably used for the detection of oxygen within the exhaust gas which is emitted from an internal combustion engine. An oxygen sensor according to the present invention can be downsized (having good space economy), and therefore the space required for attachment to an exhaust pipe can be reduced. Therefore, the entire internal combustion engine can be downsized.

An internal combustion engine having the oxygen sensor according to the present invention is suitably used for various transportation apparatuses such as motorcycles.

### EFFECTS OF THE INVENTION

According to the present invention, there is provided an oxygen sensor which is highly waterproof in a high-temperature environment and yet allows for downsizing (i.e., having good space economy).

### BRIEF DESCRIPTION OF DRAWINGS

[FIG. **1**] A cross-sectional view schematically showing an oxygen sensor **100** according to a preferred embodiment of the present invention.
[FIG. **2**] A perspective view schematically showing a cylindrical member **30** of the oxygen sensor **100.**
[FIG. **3**] A perspective view schematically showing a sealing member **40** of the oxygen sensor **100.**
[FIG. **4**] A perspective view schematically showing a watertight cap 80 of the oxygen sensor 100.
[FIG. **5**] **(a)** to **(c)** are perspective views schematically showing a first terminal, a second terminal, and a third terminal of the oxygen sensor **100**.
[FIG. **6**] A perspective view schematically showing a terminal portion **50** of the oxygen sensor **100.**
[FIG. **7**] **(a)** to **(f)** are step-by-step cross-sectional views schematically showing production steps for the oxygen sensor **100.**
[FIG. **8**] **(a)** to **(e)** are step-by-step cross-sectional views schematically showing production steps for the oxygen sensor **100.**
[FIG. **9**] A cross-sectional view schematically showing another oxygen sensor **200** according to a preferred embodiment of the present invention.
[FIG. **10**] **(a)** to **(d)** are step-by-step cross-sectional views schematically showing production steps for the oxygen sensor **200.**
[FIG. **11****]** A cross-sectional view schematically showing still another oxygen sensor **300** according to a preferred embodiment of the present invention.
[FIG. **12**] **(a)** to **(d)** are step-by-step cross-sectional views schematically showing production steps for the oxygen sensor **300.**

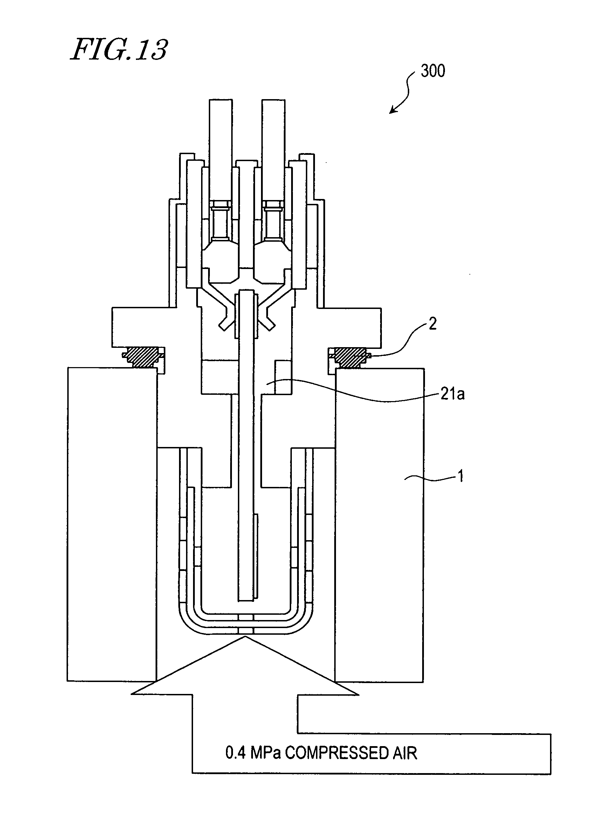

[FIG. **13**] A diagram for explaining a test method for an airtightness test.
[FIG. **14**] A side view schematically showing a motorcycle **500** incorporating the oxygen sensor **100.**
[FIG. **15**] A diagram schematically showing a control system of an internal combustion engine in the motorcycle **500.**
[FIG. **16**] A cross-sectional view schematically showing a conventional oxygen sensor **800.**

### DESCRIPTION OF THE REFERENCE NUMERALS

- **10**: sensor element
- **11**: detection section
- **12**: substrate
- **20**: housing
- **21**: attachment member
- **30**: cylindrical member
- **32**: stopper portion
- **40**: sealing member
- **42**: throughhole
- **50**: terminal portion
- **51**: first terminal
- **52**: second terminal
- **53**: third terminal
- **60**: lead
- **70**: cover member
- **71**: inner cover
- **72**: outer cover
- **73**: opening
- **80**: watertight cap
- **100, 200, 300**: oxygen sensor
- **500**: motorcycle
- **600**: internal combustion engine

### BEST MODE FOR CARRYING OUT THE INVENTION

Hereinafter, an embodiment of the present invention will be described with reference to the drawings. Note that the present invention is not limited to the following embodiment.

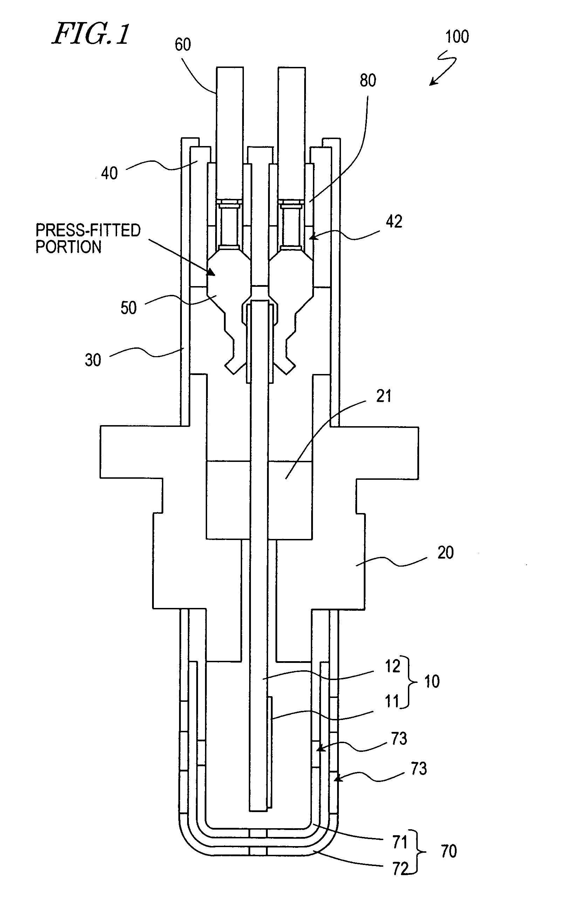

FIG. **1** shows an oxygen sensor **100** according to the present embodiment. As shown in FIG. **1**, the oxygen sensor **100** includes a sensor element **10** and a housing **20** into which the sensor element **10** is inserted. The housing **20** is made of a metal material such as stainless steel. The housing **20** allows the oxygen sensor **100** to be secured to an exhaust pipe of an internal combustion engine.

The sensor element **10** includes a detection section **11** for detecting oxygen and a substrate **12** for supporting the detection section **11**. The sensor element **10** is disposed at one end of the housing **20** in such a manner that the detection section **11** is exposed. In the present embodiment, the sensor element **10** is secured to the housing **20** by an attachment member (made of e.g. a glass material) **21** which is disposed inside the housing **20.** Note, however, that the structure for securing the sensor element **10** to the housing **20** is not limited thereto.

As the sensor element **10**, various devices can be used that are capable of detecting oxygen. For example, a sensor element of an electromotive force type using a solid electrolyte as disclosed in Japanese Laid-Open Patent Publication No. 8-114571, or a sensor element of a resistance type as disclosed in Japanese Laid-Open Patent Publication No. 5-18921 can be used.

A sensor element of the electromotive force type measures an oxygen concentration by detecting, as an electromotive force, a difference in oxygen partial pressure between a reference electrode which is exposed to the air and a measuring electrode which is exposed to exhaust gas. On the other hand, a sensor element of a resistance type detects changes in the resistivity of an oxide semiconductor layer which is provided so as to be in contact with the exhaust gas. When the oxygen partial pressure within the exhaust gas changes, the oxygen vacancy concentration in the oxide semiconductor layer changes, whereby the resistivity of the oxide semiconductor layer changes. Therefore, by detecting such changes in resistivity, it is possible to measure the oxygen concentration.

Unlike a sensor element of the electromotive force type, a sensor element of the resistance type does not require a reference electrode, and therefore permits the structure of the sensor element itself to be simplified. Therefore, from the standpoint of downsizing the oxygen sensor 100, it is preferable to use a sensor element of the resistance type. As an oxide semiconductor for a sensor element of the resistance type, titania (titanium dioxide) is used, for example. Alternatively, cerium oxide may be used. Cerium oxide has good durability and stability.

In the case where the sensor element **10** is of the electromotive force type, the detection section **11** includes a solid electrolyte layer and electrodes. In the case where the sensor element **10** is of the resistance type, the detection section **11** includes an oxide semiconductor layer and electrodes. The substrate **12** of the sensor element **10** is made of an insulative material (e.g. a ceramic material such as alumina or silicon nitride), and the detection section **11** is provided at an end of the substrate **12.**

At an end of the housing **20,** a cover member **70** is provided so as to cover the detection section **11** of the sensor element **10**. The cover member **70** is composed of an inner cover **71** and an outer cover **72**. An opening 73 for allowing exhaust gas in is formed in each of the inner cover **71** and the outer cover **72**. Preferably, the opening **73** of the inner cover **71** and the opening **73** of the outer cover **72** are disposed so as not to overlap each other, so that the exhaust gas flowing within the exhaust pipe does not directly hit the detection section **11.** The inner cover **71** and the outer cover **72** are made of a metal material such as stainless steel, and is bonded to the housing **20** by welding, for example. The inner cover **71** and the outer cover **72** are cylindrical, for example.

The oxygen sensor **100** of the present embodiment further includes a cylindrical member **30** provided at another end of the housing **20** (the opposite end from where the detection section **11** of the sensor element **10** is exposed), a sealing member **40** which seals the cylindrical member **30,** terminal portions **50** connected to the sensor element **10**, and leads **60** which are electrically connected to the sensor element **10** via the terminal portions **50.**

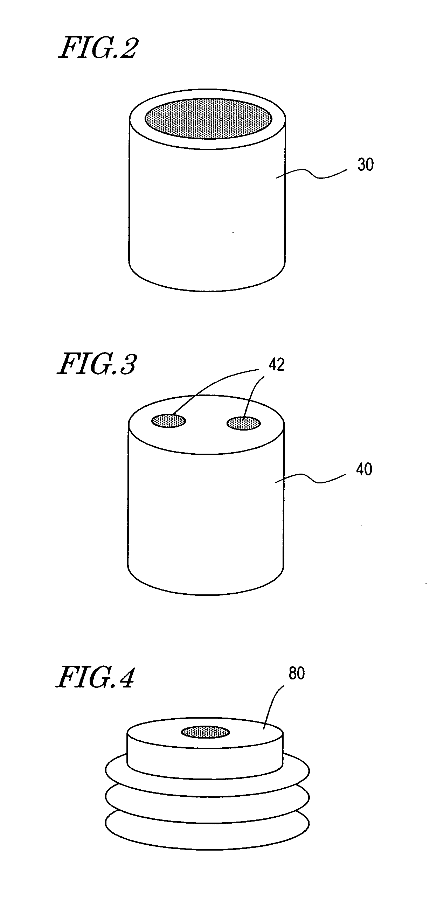

The cylindrical member **30** is made of a metal material such as stainless steel (e.g. SUS304), and is cylindrical as shown in FIG. **2****.** It is preferable that the thickness of the cylindrical member **30** is 0.7 mm or less. By forming a cylindrical member **30** which is so thin as 0.7 mm or less, it becomes possible to reduce propagation of heat from the exhaust pipe toward the sealing member **40.** This also makes it easy for the cylindrical member **30** to be deformed when the sealing member **40** is pressed into the cylindrical member **30**, with the terminal portions **50** having been pressed into the sealing member **40**, as described later. As a result, press-in can be suitably performed. The sealing member **40** is provided at the farther end of the cylindrical member **30** from the housing **20.** In the cylindrical member **30** of the present embodiment, it is unnecessary to provide the crimped portion 831, which is provided in the cylindrical member 830 of Patent Document 1. Therefore, as shown in FIG. 1, the inner diameter of the cylindrical member **30** can be made substantially identical along the longitudinal direction (i.e., a cylindrical member 30 having no constricted portion can be used). It will be appreciated that, as shown in drawings described later, the inner diameter of the cylindrical member **30** may change along the longitudinal direction.

As shown in FIG. **1** and FIG. **3**, the sealing member **40** includes columnar throughholes **42** into which the leads **60** and the terminal portions **50** are inserted. Although FIG. **3** illustrates the sealing member **40** as having two throughholes **42**, the number of throughholes **42** is not limited to two. The sealing member **40** in the present embodiment is made of a heat-resistant resin. As the heat-resistant resin, polyimide resin or phenolic resin may be used, for example.

The leads **60** are made of a metal material (e.g. copper), and is coated with an insulation material (a resin such as PTFE). In the present embodiment, the leads **60** are further covered by a watertight cap **80** in the shape of bellows as shown in FIG. **4**, and together with the watertight cap **80,** inserted into the throughholes **42**. The watertight cap **80** is made of fluoro rubber, silicone rubber, or the like.

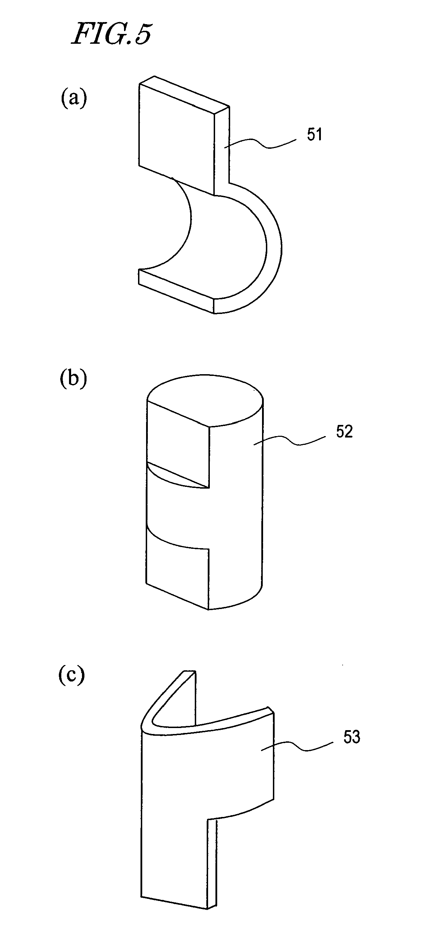

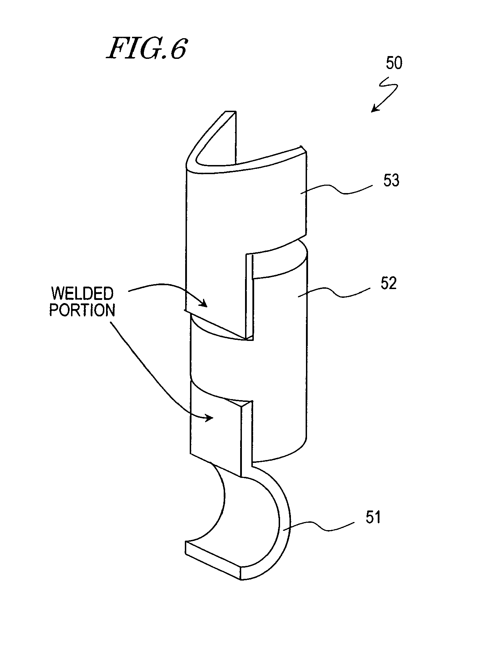

The terminal portions **50** are made of a metal material such as stainless steel or nickel alloy, and electrically connect the sensor element **10** and the leads **60.** In the present embodiment, the terminal portions **50** are press-fitted in the throughholes **42** of the sealing member **40,** as also shown in FIG. **1****.** The more detailed structure of the terminal portions **50** will be described with reference to FIG. **5** and FIG. **6**.

Each terminal portion **50** is composed of three terminals **51, 52,** and **53**, respectively shown in FIGS. **5(a)** to **(c)**, which are combined as shown in FIG. **6**. More specifically, each terminal portion **50** includes a first terminal **51** connected to the sensor element **10,** a second terminal **52** which is pressed into a throughhole **42** of the sealing member **40**, and a third terminal **53** which is connected to a lead **60**, which are bonded by welding (e.g. resistance welding) as shown in FIG. **6****.**

Among the three terminals **51, 52**, and **53** of each terminal portion **50,** the second terminal **52** is substantially columnar and has an outer diameter which is slightly larger than that of each throughhole **42** of the sealing member **40**. By pressing the terminal portion **50** having such a second terminal **52** into a throughhole **42**, the throughhole **42** is substantially completely closed. Moreover, as a result of this pressing-in, the outer diameter of the sealing member **40** also becomes slightly larger than its original outer diameter. In other words, the sealing member **40** becomes press-fitted in the cylindrical member **30**. As a result, substantially complete closing also occurs between the cylindrical member **30** and the sealing member **40**.

In the oxygen sensor **100** of the present embodiment, as has been described above, the terminal portions **50** are press-fitted in the throughholes **42** of the sealing member **40,** thus sealing the cylindrical member **30** and forming a watertight structure. Therefore, the sealing member **40** does not need to be a rubber member as is disclosed in Patent Document 1, and a heat-resistant resin can be used as the material of the sealing member **40**. As a result, it is possible to suppress deterioration in waterproofness due to deterioration of the sealing member **40** due to heat. Moreover, since it is unnecessary to make the cylindrical member **30** long in order to prevent deterioration of the sealing member **40** due to heat, the oxygen sensor **100** itself can be downsized. Furthermore, since the throughholes **42** of the sealing member **40** are closed by the press-fitted terminal portions **50,** even if the insulation material (resin such as PTFE) with which the leads **60** are coated shrinks due to heat, intrusion of water inside the oxygen sensor **100** can be prevented.

Although the present embodiment illustrates each terminal portion **50** as being composed of three terminals **51, 52**, and **53**, the structure of the terminal portions **50** is not limited thereto. It suffices if each terminal portion **50** includes a portion with a slightly larger outer diameter than that of each throughhole **42** of the sealing member **40**, and each terminal portion **50** may be formed as one piece, two pieces, or four or more pieces.

For the heat-resistant resin as the material of the sealing member **40**, a thermoplastic resin such as polyimide resin may be used, or a thermosetting resin such as phenolic resin may be used. Generally speaking, glass transition temperature is employed as a parameter indicating the heat resistance of a thermoplastic resin, whereas heat deflection temperature is employed as a parameter indicating the heat resistance of a thermosetting resin. From the standpoint of preventing deterioration of the sealing member **40** due to heat, the heat-resistant resin which is the material of the sealing member **40** preferably has a glass transition temperature or heat deflection temperature of 250°C or more, and more preferably has a glass transition temperature or heat deflection temperature of 280°C or more.

Moreover, by inserting the leads **60** into the throughholes **42** together with the watertight cap **80** as in the present embodiment, it becomes possible to prevent intrusion of water and dust with greater certainty.

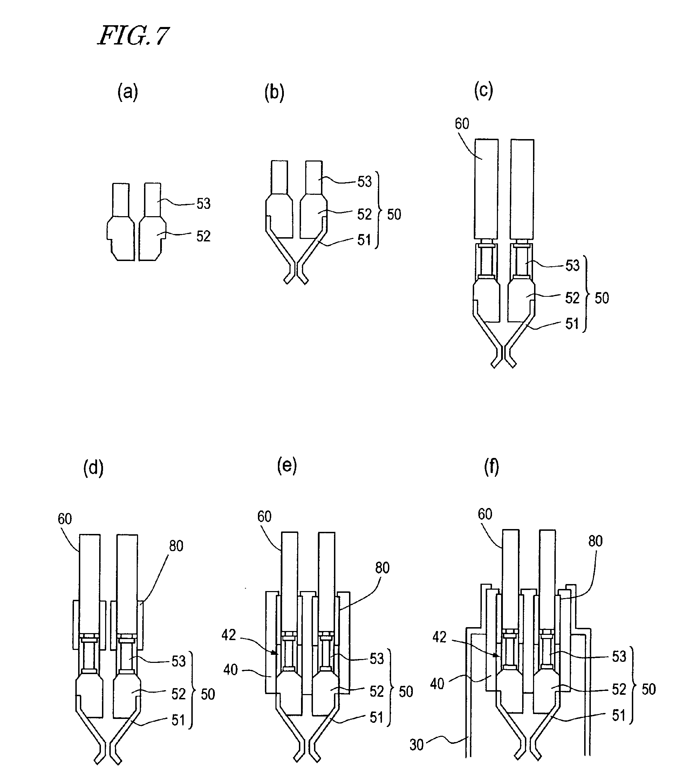

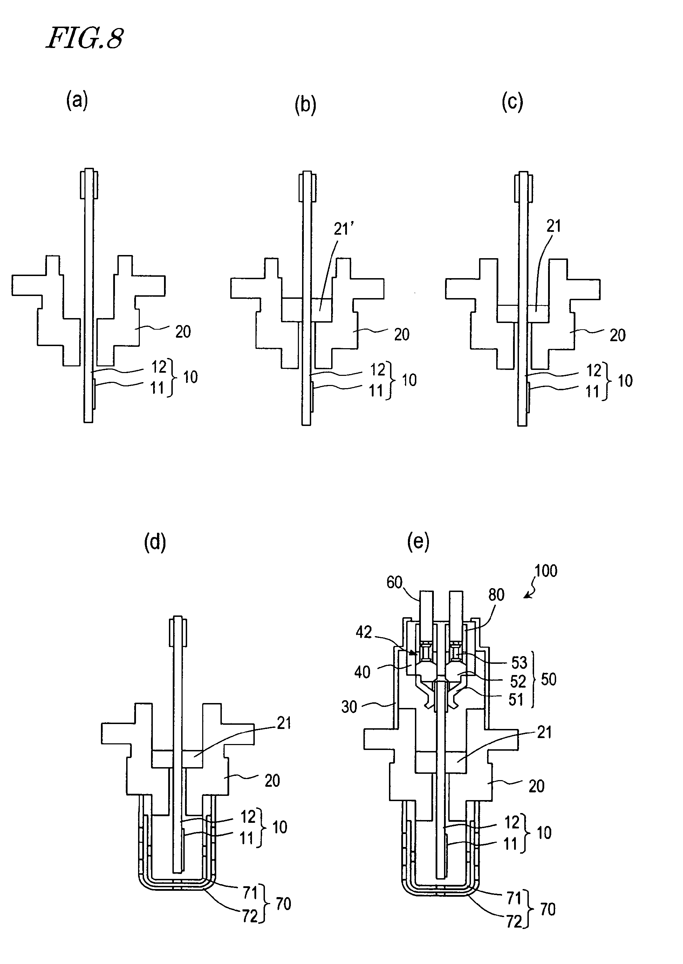

Next, an example of a method of producing the oxygen sensor **100** will be described with reference to FIG. **7** and FIG. **8**. FIGS. **7(a)** to **(f)** and FIGS. **8(a)** to **(e)** are step-by-step cross-sectional views schematically showing production steps for the oxygen sensor **100.**

First, as shown in FIG. **7(a)****,** the third terminal **53** is bonded to the second terminal **52** by welding (e.g. resistance welding). Next, as shown in FIG. **7(b)****,** the first terminal 51 is bonded to the second terminal **52** by welding (e.g. resistance welding), thus forming a terminal portion **50.**

Then, as shown in FIG. **7(c)****,** the third terminal **53** is crimped in order to connect the lead **60** and the terminal portion **50**. Thereafter, as shown in FIG. **7(d)****,** a watertight cap **80** is attached to the leads **60.**

Next, as shown in FIG. **7(e)****,** the terminal portion **50** is press-fitted in the throughhole **42** of the sealing member **40.** The press-fit margin (dimensional difference at assembly) at this time is appropriately designed so that closure of the throughhole **42** by the terminal portion **50** will occur suitably. In other words, the outer diameter of the second terminal **52** of the terminal portion **50** is prescribed so that the press-fit margin is appropriate. The press-fit margin is about 0.1 mm, for example.

Thereafter, as shown in FIG. **7(f)****,** the sealing member **40** is press-fitted in the cylindrical member **30.** The press-fit margin at this time is appropriately designed so that closure of the cylindrical member **30** by the sealing member **40** will occur suitably. In other words, the outer diameter of the sealing member **40** is prescribed so that the press-fit margin is appropriate. The press-fit margin is about 0.1 mm, for example.

Apart from producing an assembly containing the leads **60** (hereinafter simply referred to as the "lead assembly") in the above-described manner, an assembly containing the sensor element **10** (hereinafter simply referred to as a "sensor element assembly") is produced as follows.

First, as shown in FIG. **8(a)****,** the sensor element **10** including the detection section **11** and the substrate **12** is inserted into the housing **20.** At this time, the sensor element **10** is disposed so that the detection section **11** is exposed at one end of the housing **20.**

Next, as shown in FIG. **8(b)****,** a glass material **21'** is filled into the housing **20**, and thereafter as shown in FIG. **8(c)****,** the glass material **21'** is solidified to form an attachment member **21**, therebetween securing the sensor element **10** to the housing **20.**

Then, as shown in FIG. **8(d)**, a cover member **70** including the inner cover **71** and the outer cover **72** is attached to the housing **20.** This attachment is performed by welding, for example. In this manner, the sensor element assembly is completed.

Thereafter, as shown in FIG. **8(e)****,** the lead assembly is attached to the sensor element assembly. At this time, an end of the sensor element **10** (opposite end from where the detection section **11** is provided) is inserted between the first terminals **51** of the two terminal portions **50,** and the first terminals **51** and the sensor element **10** are connected. Moreover, the housing **20** of the sensor element assembly and the cylindrical member **30** of the lead assembly are bonded by e.g. welding (such as laser welding), in order to ensure watertightness. In this manner, the oxygen sensor **100** is completed.

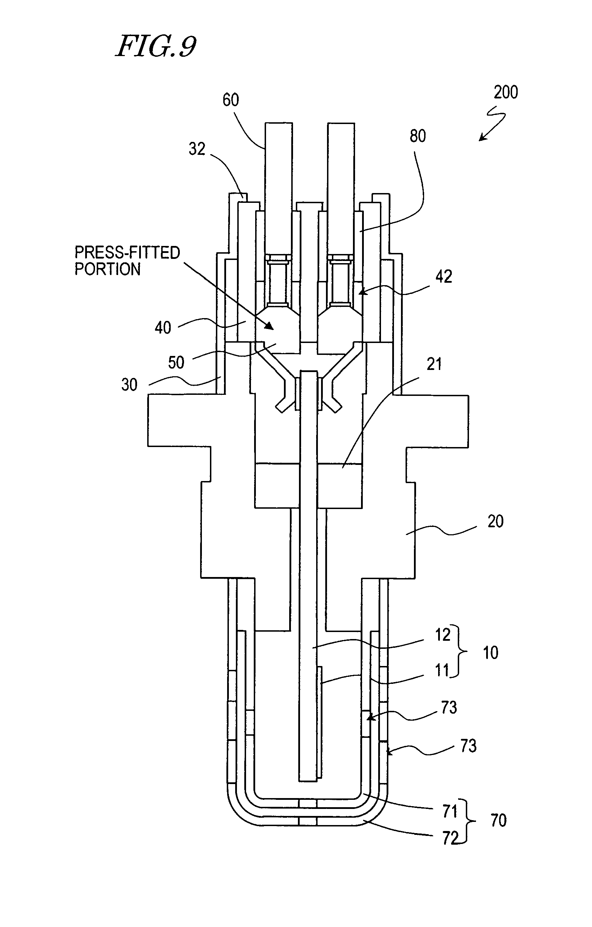

Then, other oxygen sensors according to the present embodiment will be described. FIG. **9** shows another oxygen sensor **200** according to the present embodiment.

From the oxygen sensor **100** shown in FIG. **1**, in which the housing **20** and the sealing member **40** are provided away from each other, the oxygen sensor **200** shown in FIG. **9** is distinct in that the housing **20** and the sealing member **40** abut each other (i.e., they are in contact where they meet).

The oxygen sensor **200** is produced as follows, for example.

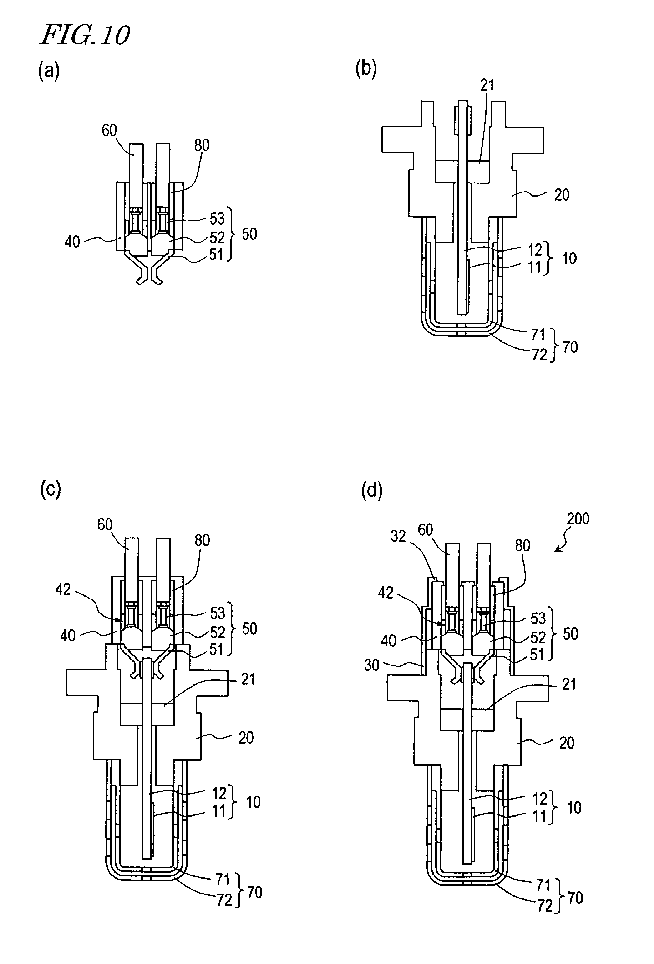

First, as shown in FIG. **10(a)****,** a lead assembly is provided in which the terminal portions **50** being connected to the leads **60** are press-fitted in the throughholes **42** of the sealing member **40**. This lead assembly can be produced in a manner similar to that which was described with reference to FIGS. **7(a)** to **(e)**, but, unlike the lead assembly shown in FIG. **7(f)**, does not include the cylindrical member **30.**

Next, as shown in FIG. **10(b)****,** a sensor element assembly is provided in which the sensor element **10** is inserted into the housing **20** and the cover member **70** is attached to the housing **20**. This sensor element assembly can be produced in a manner similar to that which was described with reference to FIGS. **8(a)** to **(d)**.

Then, as shown in FIG. **10(c)****,** the lead assembly is attached to the sensor element assembly, and thereafter as shown in FIG. **10(d)**, the sealing member **40** is press-fitted to the cylindrical member **30.** In this manner, the oxygen sensor **200** is completed.

In the oxygen sensor **100** shown in FIG. **1**, when attaching the lead assembly to the sensor element assembly (the step shown in FIG. **8(e)****),** the cylindrical member **30** of the lead assembly abuts the housing **20** of the sensor element assembly, so that the cylindrical member **30** and the housing **20** function as a positioning structure.

On the other hand, in the oxygen sensor **200** shown in FIG. **9**, when attaching the lead assembly to the sensor element assembly (the step shown in FIG. **10(c)****),** the sealing member **40** of the lead assembly abuts the housing **20** of the sensor element assembly, so that the sealing member **40** and the housing **20** function as a positioning structure.

Thus, since the lead assembly can be attached to the sensor element assembly without the cylindrical member **30** (see FIG. **10(c)****),** the terminal portions **50** can be attached to the sensor element **10** under eyesight. Therefore, it is easy to achieve connection between the terminal portions **50** and the sensor element **10** (e.g. as performed by inserting the sensor element **10** between the first terminals 51), thereby resulting in a greater ease of assembly.

Moreover, the cylindrical member **30** shown in FIG. **9** includes a stopper portion **32** for stopping the sealing member **40** at the farther end from the housing **20.** The stopper portion **32** is formed so as to protrude inwards along the radial direction of the cylindrical member **30** (e.g. about 1 mm). By providing such a stopper portion **32**, it becomes possible to firmly secure the sealing member **40** using the stopper portion **32** and the housing (i.e., a housing that abuts the sealing member **40) 20.**

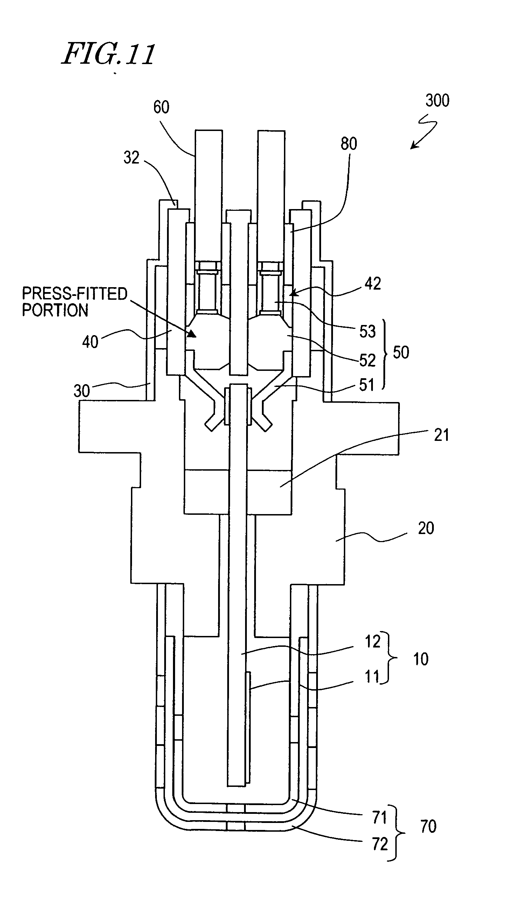

FIG. **11** shows still another oxygen sensor 300 according to the present embodiment.

The oxygen sensor **300** shown in FIG. **11** is similar to the oxygen sensor **200** shown in FIG. 9 in that the housing **20** and the sealing member **40** abut each other, but differs therefrom in that the housing **20** and the sealing member **40** are shaped so as to be fitted together.

The oxygen sensor **300** is produced as follows, for example.

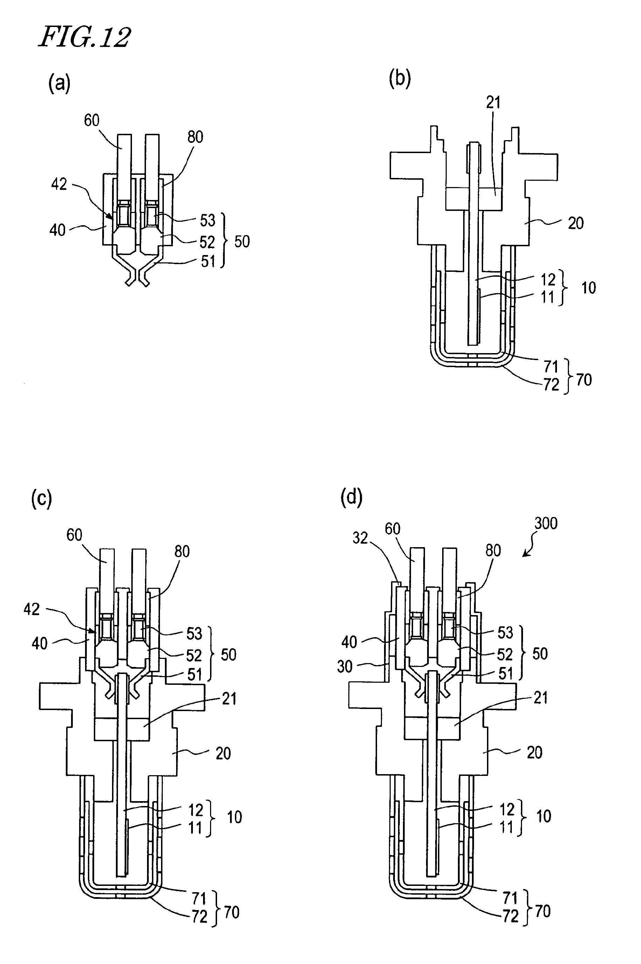

First, as shown in FIG. **12(a)****,** a lead assembly is provided in which the terminal portions **50** being connected to the leads **60** are press-fitted in the throughholes **42** of the sealing member **40**. This lead assembly can be produced in a manner similar to that which was described with reference to FIGS. **7(a)** to **(e)**.

Next, as shown in FIG. **12(b)****,** a sensor element assembly is provided in which the sensor element **10** is inserted in the housing **20** and the cover member **70** is attached to the housing **20.** This sensor element assembly can be produced in a manner similar to that which was described with reference to FIGS. **8(a)** to **(d)**.

Then, as shown in FIG. **12(c)**, the lead assembly is attached to the sensor element assembly, and thereafter as shown in FIG. **12(d)**, the sealing member **40** is press-fitted to the cylindrical member **30**. In this manner, the oxygen sensor **300** is completed.

In the oxygen sensor **300** shown in FIG. **11**, the housing **20** and the sealing member **40** are shaped so as to be fitted together. Therefore, in the step of press-fitting the sealing member **40** to the cylindrical member **30** (the step shown in FIG. **12(d)**), movement of the sealing member **40** along the horizontal direction (the direction orthogonal to the center axis of the oxygen sensor **300**) can be limited. Therefore, the stress acting on the foot of the sensor element **10** can be reduced, and occurrence of product defects due to breakage of the sensor element **10** can be suppressed.

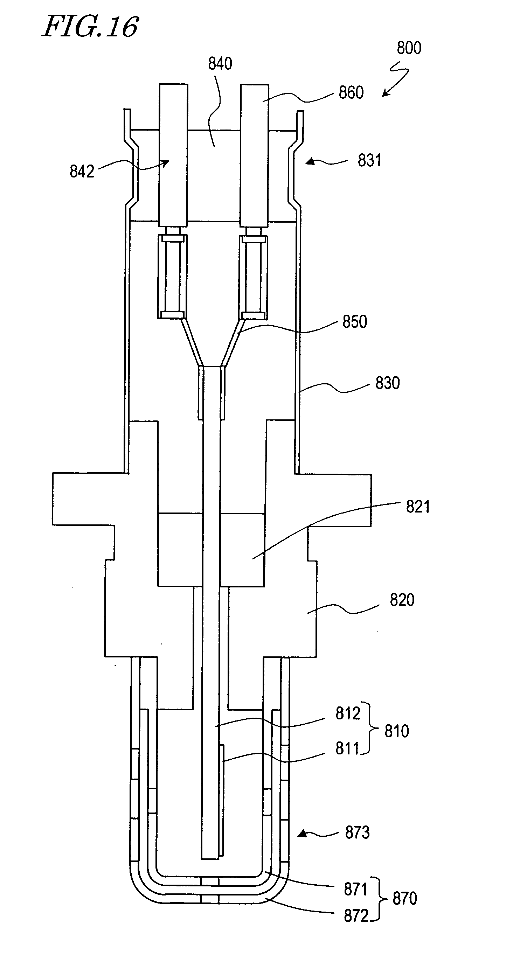

Now, results of actually prototyping the oxygen sensor **300** of the present embodiment and the conventional oxygen sensor **800** shown in FIG. **16****,** and evaluating their waterproofness in an airtightness test, will be described. As shown in FIG**. 13****,** the airtightness test was performed by, with the oxygen sensor **300** being set on an air introducing jig **1,** introducing 0.4 MPa compressed air into the housing **20** from an end where the detection section **11** of the oxygen sensor **300** is situated, and observing presence/absence of air leakage (air leakage from the airtight structure constituted by the sealing member **40**) under water. Throughholes **21a** for air introduction are formed in the attachment member **21** within the housing **20**. Airtightness between the oxygen sensor **300** and the air introducing jig **1** is ensured by providing an O ring **2** between the air introducing jig 1 and the housing **20.**

Table 1 shows results of the airtightness test with respect to the oxygen sensor **300** of the present embodiment (Example) and the conventional oxygen sensor **800** (Comparative Example), after being left at 250°C for a certain period of time. In Table 1, "○" means absence of air leakage, and "× " means presence of air leakage. Table 2 shows the specifications of the cylindrical member, leads, and the sealing member with respect to each of the Example and the Comparative Example.

**[Table 1]**

| | No. | time of being left at 250°C (h) | | | | | | | | | |
|---|---|---|---|---|---|---|---|---|---|---|---|
| | | 0 | 2 | 4 | 6 | 8 | 10 | 24 | 48 | 75 | 100 |
| Example | 1 | ○ | ○ | ○ | ○ | ○ | ○ | ○ | ○ | ○ | ○ |
| | 2 | ○ | ○ | ○ | ○ | ○ | ○ | ○ | ○ | ○ | ○ |
| | 3 | ○ | ○ | ○ | ○ | ○ | ○ | ○ | ○ | ○ | ○ |
| Comparative Example | 1 | ○ | ○ | ○ | ○ | ○ | ○ | × | × | × | × |
| | 2 | ○ | ○ | ○ | ○ | ○ | × | × | × | × | × |
| | 3 | ○ | ○ | ○ | ○ | ○ | × | × | × | × | × |

**[Table 2]**

| | Example | Comparative Example |
|---|---|---|
| cylindrical member | outer diameter Φ10 mm, plate thickness 0.5 mm | |
| lead | outer diameter Φ 1.65 mm | |
| sealing member | heat-resistant resin, outer diameter Φ9.1 mm, throughhole diameter Φ1.65 mm, hole pitch diameter Φ5.2 mm | fluoro rubber (hardness 80Hs), outer diameter Φ9.0 mm, throughhole diameter Φ1.7 mm, hole pitch diameter Φ5.2 mm |

As can be seen from Table 1, the Comparative Example experienced an air leakage after being left at a high temperature for a long time. On the other hand, the Example did not experience an air leakage even after being left at a high temperature for a long time. Thus, it was proven that the oxygen sensor according to the present invention has good waterproofness in a high-temperature environment.

The oxygen sensors **100, 200,** and **300** according to the present embodiment are highly waterproof in a high-temperature environment, and therefore are suitably used for the detection of oxygen within the exhaust gas which is emitted from an internal combustion engine. The oxygen sensors **100, 200,** and **300** according to the present embodiment can be downsized (having good space economy), and therefore the space required for attachment to an exhaust pipe can be reduced. Therefore, the entire internal combustion engine can be downsized.

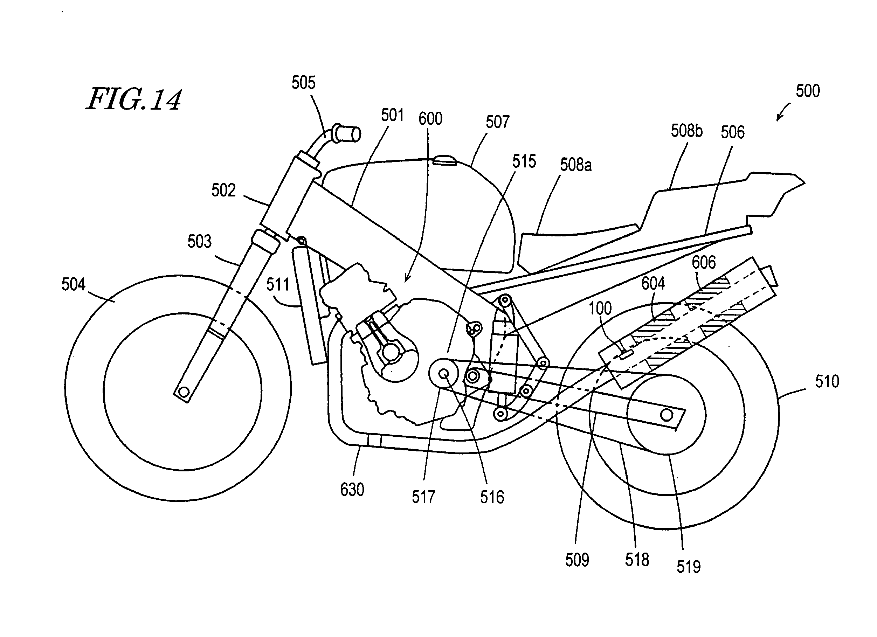

FIG. **14** schematically shows a motorcycle **500** incorporating the oxygen sensor **100** according to the present embodiment. The motorcycle **500** includes a body frame **501** and an internal combustion engine **600.** A head pipe **502** is provided at the front end of the body frame **501.** To the head pipe **502,** a front fork **503** is attached so as to be capable of swinging in the right-left direction. At the lower end of the front fork **503**, a front wheel **504** is supported so as to be capable of rotating. Handle bars **505** are attached to the upper end of the head pipe **502.**

A seat rail **506** is attached at an upper portion of the rear end of the body frame **501** so as to extend in the rear direction. A fuel tank **507** is provided above the body frame **501,** and a main seat **508a** and a tandem seat **508b** are provided on the seat rail **506**. Moreover, rear arms **509** extending in the rear direction are attached to the rear end of the body frame **501**. At the rear end of the rear arms **509,** a rear wheel **510** is supported so as to be capable of rotating.

The internal combustion engine **600** is held at the central portion of the body frame **501.** A radiator **511** is provided in front of the internal combustion engine **600.** An exhaust pipe **630** is connected to an exhaust port of the internal combustion engine **600.** An oxygen sensor **100**, a ternary-type catalyst **604,** and a muffler **606** are provided on the exhaust pipe **630.** The oxygen sensor **100** detects oxygen within the exhaust gas flowing in the exhaust pipe **630**.

A transmission **515** is linked to the internal combustion engine **600.** Driving sprockets **517** are attached on an output axis **516** of the transmission **515.** Via a chain **518,** the driving sprockets **517** are linked to rear wheel sprockets **519** of the rear wheel **510.**

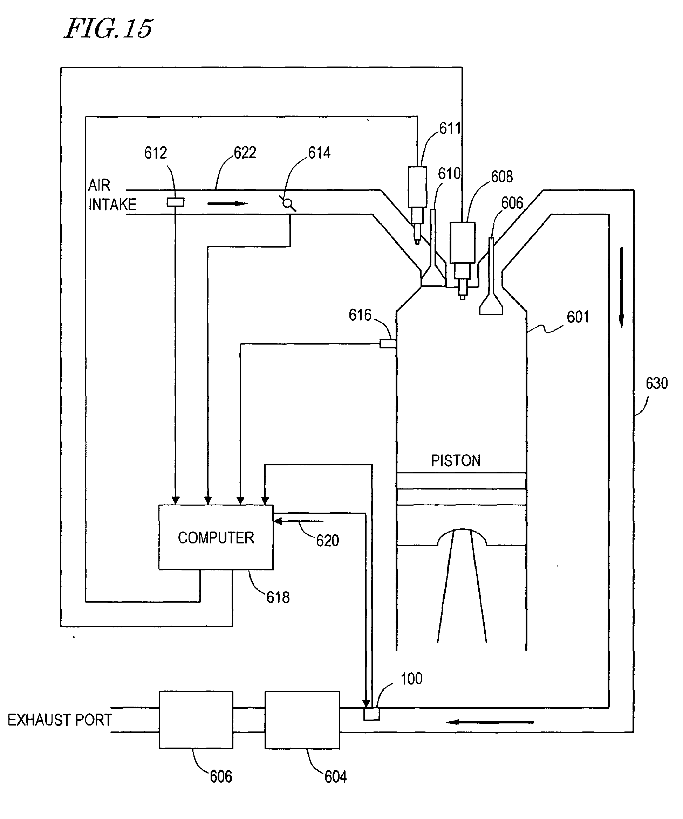

FIG. **15** shows main component elements of a control system of the internal combustion engine **600**. On a cylinder **601** of the internal combustion engine **600,** an intake valve **610**, an exhaust valve **606**, and a spark plug **608** are provided. There is also provided a water temperature sensor **616** for measuring the water temperature of the cooling water with which to cool the engine. The intake valve **610** is connected to an intake manifold **622,** which has an air intake. On the intake manifold **622**, an airflow meter **612**, a throttle sensor **614** of a throttle valve, and a fuel injector **611** are provided.

The airflow meter **612**, the throttle sensor **614**, the fuel injector **611,** the water temperature sensor **616,** the spark plug **608,** and the oxygen sensor **100** are connected to a computer **618,** which is a control section. A vehicle velocity signal **620**, which represents the velocity of the motorcycle **500**, is also input to the computer **618.**

When a rider starts the internal combustion engine **600** by using a self-starting motor (not shown), the computer **618** calculates an optimum fuel amount based on detection signals and the vehicle velocity signal **620** obtained from the airflow meter **612**, the throttle sensor **614,** and the water temperature sensor **616**, and based on the result of calculation, outputs a control signal to the fuel injector **611**. The fuel which is injected from the fuel injector **611** is mixed with the air which is supplied from the intake manifold **622,** and injected into the cylinder **601** via the intake valve **610,** which is opened or closed with appropriate timing. The fuel which is injected in the cylinder **601** combusts to become exhaust gas, which is led to the exhaust pipe **630** via the exhaust valve **606**.

The oxygen sensor **100** detects the oxygen in the exhaust gas, and outputs a detection signal to the computer **618.** Based on the signal from the oxygen sensor **100**, the computer **618** determines the amount of deviation of the air-fuel ratio from an ideal air-fuel ratio. Then, the amount of fuel which is injected from the fuel injector **611** is controlled so as to attain the ideal air-fuel ratio relative to the air amount which is known from the signals obtained from the flow meter **612** and the throttle sensor **614.** Thus, an air-fuel ratio controller which includes the oxygen sensor **100** and the computer (control section) **618** connected to the oxygen sensor **100** appropriately controls the air-fuel ratio of the internal combustion engine.

In the motorcycle **500** of the present embodiment, the oxygen sensor **100** is highly waterproof, and therefore the oxygen sensor **100** can be properly operated even in an environment where wetting is predictable. Therefore, even in such an environment, fuel and air can be mixed at an appropriate air-fuel ratio; fuel can be combusted under an optimum condition; and the concentration of NOx and other regulated substances within the exhaust gas can be reduced. Moreover, since the oxygen sensor **100** has good space economy, it can be attached even if the space around the exhaust pipe **630** is small.

Although the present embodiment has illustrated a motorcycle for instance, the oxygen sensor according to the present invention can also be used for any other transportation apparatus, e.g., a four-wheeled automobile. However, in a motorcycle, the distance from the end of the exhaust pipe to the position where the oxygen sensor is attached is short, and droplets of water are likely to attach to the oxygen sensor. Therefore, the oxygen sensor according to the present invention is particularly suitably used for a motorcycle. Moreover, the internal combustion engine is not limited to a gasoline engine, but may alternatively be a diesel engine.

### INDUSTRIAL APPLICABILITY

The gas sensor according to the present invention is highly waterproof in a high-temperature environment and permits downsizing, and therefore can be suitably used for an internal combustion engine of various transportation apparatuses, e.g., a car, a bus, a truck, a motorbike, a tractor, an airplane, a motorboat, a vehicle for civil engineering use, or the like.

## Claims

1. An oxygen sensor comprising:
a sensor element having a detection section for detecting oxygen;
a housing, the sensor element being inserted at one end thereof in such a manner that the detection section is exposed;
a cylindrical member provided at another end of the housing;
a sealing member for sealing the cylindrical member; and
a terminal portion connected to the sensor element, wherein,
the sealing member has a throughhole, and is made of a heat-resistant resin; and
the terminal portion is press-fitted in the throughhole of the sealing member.

2. The oxygen sensor of claim 1, wherein the housing and the sealing member abut each other.

3. The oxygen sensor of claim 2, wherein the housing and the sealing member are shaped so as to be fitted together.

4. The oxygen sensor of any of claims 1 to 3, wherein the heat-resistant resin has a glass transition temperature or heat deflection temperature of 250°C or more.

5. The oxygen sensor of any of claims 1 to 4, comprising a lead which is electrically connected to the sensor element via the terminal portion, wherein,
the lead is inserted in the throughhole of the sealing member.

6. The oxygen sensor of claim 5, further comprising a watertight cap covering the lead, wherein the lead is inserted in the throughhole together with the watertight cap.

7. An internal combustion engine comprising the oxygen sensor of any of claims 1 to 6.

8. A transportation apparatus comprising the internal combustion engine of claim 7.
